# FASCICULE DE BREVET EUROPEEN

(11) **EP 3 989 788 B1**
(45) Date de publication et mention de la délivrance du brevet: **27.08.2025**
(21) Numéro de dépôt: 20732946.7
(22) Date de dépôt: 18.06.2020
(51) Int. Cl.: A47J 43/044, A47J 43/07

(54) **BOITIER MOTORISÉ D'APPAREIL ÉLECTROMENAGER CONFIGURÉ POUR ÊTRE TENU A LA MAIN**
MOTORISIERTES GEHÄUSE FÜR EIN TRAGBARES HAUSHALTSGERÄT
MOTORISED HOUSING FOR A HOUSEHOLD APPLIANCE CONFIGURED TO BE HAND-HELD

(30) Priorité: 26.06.2019 FR 1906922
(43) Date de publication de la demande: 04.05.2022
(73) Titulaire: SEB S.A., 69130 Ecully (FR)
(72) Inventeur: GRASSIN, Stéphane, 53100 MOULAY (FR); CERCLIER, Philippe, 53440 ARON (FR)
(74) Mandataire: SEB Développement
(86) Numéro de dépôt international: PCT/EP2020/067031
(87) Numéro de publication internationale: WO 2020/260140

(56) Documents cités:
- EP-A1- 3 138 450
- WO-A1-2007/020161
- CN-U- 204 891 736
- CN-Y- 201 070 294

## Description

### DOMAINE DE L'INVENTION

La présente invention concerne le domaine technique général des appareils électroménagers comportant un boîtier motorisé en forme de fût tubulaire configuré pour être tenu à la main.

La présente invention concerne notamment les mixeurs ménagers de type plongeant, qui comportent un pied de mixage dont l'extrémité inférieure est pourvue d'un outil de travail rotatif prévu pour broyer des aliments.

La présente invention concerne plus particulièrement le boîtier motorisé de tels appareils. Si désiré, un tel boîtier motorisé peut être utilisé avec d'autres accessoires qu'un pied de mixage, notamment un accessoire mono-fouet ou un accessoire bi-fouets.

### ARRIERE-PLAN TECHNOLOGIQUE DE L'INVENTION

Les appareils mentionnés plus haut sont très répandus dans les foyers.

Dans une volonté de supprimer les accidents domestiques dus au fait que le moteur pourrait rester en fonctionnement (tout en entraînant l'outil de travail rotatif) alors que l'utilisateur ne fait plus usage de l'appareil, de nombreux fabricants ont prévus des dispositifs de sécurité.

Le boîtier motorisé de certains appareils est pourvu d'un premier actionneur de déverrouillage dudit moteur et d'un second actionneur d'entraînement dudit moteur à vitesse variable.

Ainsi, pour se servir d'un tel appareil, il est nécessaire, dans un premier temps, d'activer le premier actionneur, ce qui permet de déverrouiller l'actionnement du moteur, puis le second actionneur, pour entrainer le moteur, si désiré à vitesse variable.

Dans ce contexte, on décrit dans EP 2 130 469 un mixeur qui comprend un premier commutateur d'activation situé sur la surface supérieure du boîtier motorisé du mixeur. Le second commutateur de fonctionnement est situé sur la face frontale de la poignée du boîtier motorisé, loin du premier commutateur, afin que ce dernier ne puisse être commandé facilement par un utilisateur saisissant le boîtier motorisé pour l'utiliser.

Un tel appareil est perfectible en termes de sécurité. En effet, dès lors que le premier commutateur est activé, on ne peut exclure le risque que le second commutateur le soit également, suite à une chute de l'appareil ou d'une mauvaise manipulation.

Le document EP 2 269 490 décrit un appareil de structure analogue qui, de fait, présente les mêmes inconvénients que ceux développés ci-dessus.

La présente invention vise justement à solutionner ce problème et à proposer un boîtier motorisé configuré pour être tenu à la main, notamment pour mixeur ménager de type plongeant du type évoqué plus haut, qui ne présente aucun risque de mise en route, en dehors d'une action volontaire de son utilisateur, ainsi qu'un mixeur ménager de type plongeant, comprenant un boîtier motorisé en forme de fût tubulaire, ainsi qu'un pied de mixage comportant une extrémité inférieure pourvue d'un outil de travail rotatif configuré pour être entrainé en rotation par ledit boîtier motorisé.

Un autre appareil de ce type est décrit dans le document CN 201 070 294 Y.

### RESUME DE L'INVENTION

L'invention est définie par les revendications ci-jointes.

Ainsi, la présente invention se rapporte à un boîtier motorisé en forme de fût tubulaire configuré pour être tenu à la main, notamment pour mixeur ménager de type plongeant, ledit boîtier motorisé logeant un moteur, ledit boîtier motorisé étant pourvu d'un premier actionneur de sécurité, configuré pour autoriser l'alimentation électrique dudit moteur lorsqu'il est activé par l'utilisateur et pour interdire l'alimentation électrique du moteur lorsqu'il n'est pas activé par l'utilisateur, et d'un second actionneur de commande configuré pour commander l'entraînement à vitesse variable dudit moteur, le second actionneur de commande n'étant opérationnel que lorsque le premier actionneur de sécurité a été préalablement sollicité pour activer ledit moteur, du fait que ledit premier actionneur de sécurité et ledit second actionneur de commande sont disposés de part et d'autre d'une zone circonférentielle dudit boitier motorisé. En d'autres termes, lorsque le premier actionneur de sécurité n'est pas sollicité par l'utilisateur, le boîtier motorisé est verrouillé et le moteur ne peut fonctionner, alors que lorsque le premier actionneur de sécurité est sollicité par l'utilisateur, le boîtier motorisé est déverrouillé et le moteur peut fonctionner selon la commande du second actionneur de commande.

Ainsi, la cinématique de déverrouillage de la sécurité devient intuitive pour l'utilisateur dans le sens où quand ce dernier prend le boîtier motorisé en main (main placée sous le cordon d'alimentation électrique du moteur, quand ce cordon d'alimentation électrique est présent), l'utilisateur déverrouille automatiquement le boîtier motorisé en déclenchant le premier actionneur de sécurité. Cette action ne nécessite pas d'action particulière de sa part. Le simple fait de prendre le boîtier motorisé en main suffit à actionner ou à activer le premier actionneur de sécurité. L'action de déverrouillage de la sécurité devient donc quasi naturelle dans la cinématique de prise en main du boîtier motorisé.

Dans l'hypothèse où l'utilisateur préfère prendre le boîtier motorisé dans l'autre sens (c'est à dire paume de la main sur la face avant du boîtier motorisé opposée au cordon d'alimentation électrique), le premier actionneur de sécurité peut être actionné ou activé par l'index pendant que le second actionneur de commande peut être actionné ou activé par le pouce.

Par conséquent, grâce à ces caractéristiques, on autorise deux sens de prise en main du boîtier motorisé, en fonction de la préférence de l'utilisateur (même si l'usage préférentiel est le premier présenté plus haut).

Avantageusement, ledit premier actionneur de sécurité est disposé exactement ou sensiblement à l'opposé dudit second actionneur de commande par rapport à ladite zone circonférentielle.

Ainsi, on autorise une prise en main naturelle, de façon à ne pas obliger l'utilisateur à casser le poignet. Au contraire, l'utilisateur garde le poignet parfaitement aligné avec l'avant-bras. Dans ce cas, l'index et parfois le majeur se retrouve(nt) légèrement au-dessus du creux de la paume situé entre le pouce et l'index.

Cela permet une bonne prise en main du boîtier motorisé et un bon maintien lors du démarrage du moteur.

Selon l'invention, le boîtier motorisé comporte un cordon d'alimentation électrique et une zone de raccordement dudit cordon d'alimentation électrique au boîtier motorisé, ladite zone de raccordement étant agencée dans une zone d'extrémité supérieure dudit boîtier motorisé, ledit premier actionneur de sécurité s'étend juste en dessous de la zone de raccordement dudit cordon d'alimentation électrique au dit boîtier motorisé.

De cette manière, le premier actionneur de sécurité se retrouve en quelque sorte protégé par le cordon d'alimentation électrique. De plus le premier actionneur de sécurité se situe dans une zone moins visible de sorte qu'il n'affecte pas l'esthétisme du boîtier motorisé.

Un actionnement ou une activation involontaire de ce premier actionneur de sécurité n'est pas possible. Seule une action humaine et volontaire de prise en main du boîtier motorisé permet son enclenchement. De plus, dans le cas où le boîtier motorisé est déposé sur une surface telle qu'une table, sur sa face arrière (c'est à dire celle où est implanté le premier actionneur de sécurité), l'appareil pivotera sur la gauche ou droite à cause du cordon d'alimentation électrique, empêchant ainsi tout contact du premier actionneur de sécurité avec ladite surface ou avec un élément externe posé sur ladite surface.

Selon un mode de réalisation, ledit boîtier motorisé présente une protubérance latérale dans laquelle est agencée la zone de raccordement dudit cordon d'alimentation électrique au dit boîtier motorisé.

Selon un mode de réalisation, ledit boîtier motorisé présente une face d'extrémité supérieure qui comporte un indicateur visuel de l'état d'activation ou de l'état d'extinction dudit moteur.

La présence d'un tel indicateur visuel fait que, quand le boîtier motorisé est connecté au secteur, un logo représentant par exemple un cadenas de couleur rouge est affiché. Toutefois, l'actionnement ou l'activation du premier actionneur de sécurité permet "d'éteindre", c'est-à-dire de faire disparaître ce logo, ce qui renseigne l'utilisateur sur l'actionnement ou l'activation du premier actionneur de sécurité, alors que ledit premier actionneur de sécurité n'est pas nécessairement visible par l'utilisateur.

Selon un mode de réalisation, ledit premier actionneur de sécurité est un actionneur mécanique mobile entre une position de repos stable interdisant l'alimentation électrique du moteur, occupée en l'absence de sollicitation de l'utilisateur, et une position de fonctionnement autorisant l'alimentation électrique du moteur, occupée lors d'une sollicitation de l'utilisateur.

Alors, selon une forme de réalisation, ledit premier actionneur de sécurité en position de fonctionnement autorise l'alimentation électrique du moteur en actionnant un interrupteur électrique monté dans le circuit d'alimentation électrique du moteur.

L'alimentation électrique du moteur est ainsi verrouillée ou déverrouillée électriquement.

Alors, selon une autre forme de réalisation, ledit premier actionneur de sécurité est un actionneur mécanique mobile entre une position de repos bloquant le second actionneur de commande dans une position dans laquelle le second actionneur de commande interdit l'alimentation électrique du moteur, et une position de fonctionnement autorisant le déplacement du second actionneur de commande vers des positions dans lesquelles est autorisée l'alimentation électrique du moteur pour commander l'entraînement à vitesse variable du moteur.

L'alimentation électrique du moteur est ainsi verrouillée ou déverrouillée mécaniquement.

Selon un mode de réalisation, ledit premier actionneur de sécurité est allongé selon la direction du fût tubulaire.

Cette disposition permet de faciliter l'actionnement du premier actionneur de sécurité sans nécessiter de position précise de la main lorsque l'utilisateur prend en main le boîtier motorisé.

Selon l'invention, ledit premier actionneur de sécurité a la forme d'une lame basculante dont une partie forme saillie dudit boîtier motorisé en l'absence de sollicitation.

Selon l'invention, ledit premier actionneur de sécurité en forme d'une lame basculante présente un axe de pivotement agencé à l'opposé du cordon d'alimentation électrique.

La rotation (par pivotement) se fait sur un point bas (axe de rotation) sur ledit premier actionneur de sécurité. Il n'y a pas besoin d'un grand déplacement et d'une grande force en partie haute pour activer le commutateur qui est situé en arrière de ce premier actionneur de sécurité.

Selon un mode de réalisation, la section du fut tubulaire diminue à partir de l'axe de pivotement en direction de la zone de raccordement du cordon d'alimentation électrique au boîtier motorisé. Cette disposition permet une meilleure préhension du fut tubulaire.

Selon un mode de réalisation, la partie de la lame basculante formant saillie dudit boîtier motorisé en l'absence de sollicitation est agencée entre l'axe de pivotement et la zone de raccordement du cordon d'alimentation électrique au boîtier motorisé. Ainsi lorsque le boîtier motorisé repose sur une surface plane la présence du cordon d'alimentation électrique permet d'éviter que la lame basculante soit repoussée par ladite surface plane.

Selon un mode de réalisation, ledit premier actionneur de sécurité en forme d'une lame basculante comporte un indicateur de position restant visible dans les positions de la lame basculante dans lesquelles le premier actionneur de sécurité interdit l'alimentation électrique du moteur.

Selon un mode de réalisation, ledit premier actionneur de sécurité comporte au moins un capteur associé à un circuit de commande autorisant l'alimentation électrique du moteur lorsque ledit au moins un capteur est sollicité par un utilisateur, et interdisant l'alimentation électrique du moteur lorsque ledit au moins un capteur n'est pas sollicité par un utilisateur, le ou au moins l'un des capteurs pouvant être un capteur capacitif, un capteur de pression, un capteur thermique, ou un capteur optique.

L'alimentation électrique du moteur est ainsi verrouillée ou déverrouillée par des moyens électroniques pilotés par le ou les capteurs.

Selon un mode de réalisation, ledit premier actionneur de sécurité est au moins partiellement entouré par une zone réalisée en matériau élastomère, et de préférence est complètement entouré par une zone réalisée en matériau élastomère.

Cela permet une pleine prise en main du boîtier motorisé et un bon maintien lors du démarrage du moteur. De plus, la paume de la main est calée contre une zone de type "soft touch" qui permet un bon calage de la paume et un serrage du produit.

Selon un mode de réalisation, ledit second actionneur de commande est allongé selon la direction du fût tubulaire.

Ainsi, ce second actionneur de commande peut être sollicité à un seul doigt mais autorise également l'emploi de deux doigts. La longueur du second actionneur de commande permet donc à l'utilisateur d'avoir une plus grande zone d'actionnement. Cela permet ainsi aux petites mains comme aux grandes mains de pouvoir être confortables.

Selon un mode de réalisation, ledit second actionneur de commande a la forme d'un bouton poussoir formant saillie dudit boîtier motorisé en l'absence de sollicitation.

De cette façon, lorsque l'utilisateur saisit le boîtier motorisé du mixeur, il peut ainsi aisément détecter le bouton poussoir proéminent situé derrière le boîtier motorisé par rapport à son champ de vision.

L'invention se rapporte également à un appareil électroménager de type mixeur plongeant, comprenant un boîtier motorisé en forme de fût tubulaire, ainsi qu'un pied de mixage comportant une extrémité inférieure pourvue d'un outil de travail rotatif configuré pour être entrainé en rotation par ledit boîtier motorisé, dans lequel le boîtier motorisé est conforme à l'une au moins des caractéristiques précitées.

Avantageusement alors, ledit pied de mixage est configuré pour être assemblé avec le boîtier motorisé pour entrainer en rotation l'outil de travail rotatif.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
La figure 1 est une vue partielle, de côté, d'un boîtier motorisé conforme à la présente invention, assemblé avec un pied de mixage représenté de manière schématique ;
La figure 2 est une vue analogue à la figure précédente, le boîtier motorisé étant vu de trois quart face ;

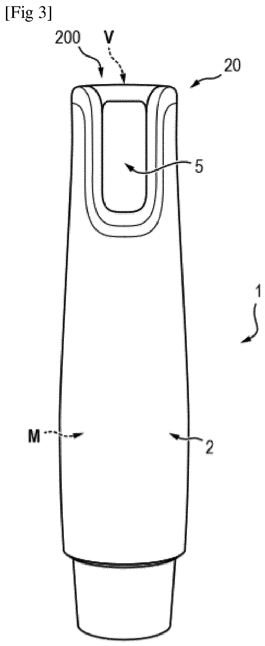

La figure 3 est une vue partielle et de face du boîtier motorisé de la figure 1 ;
La figure 4 est une vue représentant partiellement le boîtier motorisé des figures 1 à 3, dans la position que le boîtier motorisé occupe lorsque le boîtier motorisé repose à plat sur un support tel qu'un plan de travail de cuisine ;
La figure 5 est une vue de détail en coupe d'une partie du boîtier motorisé représenté sur les figures 1 à 4, destiné à illustrer la structure et le fonctionnement d'un premier actionneur de sécurité.

### DESCRIPTION DETAILLEE DE L'INVENTION

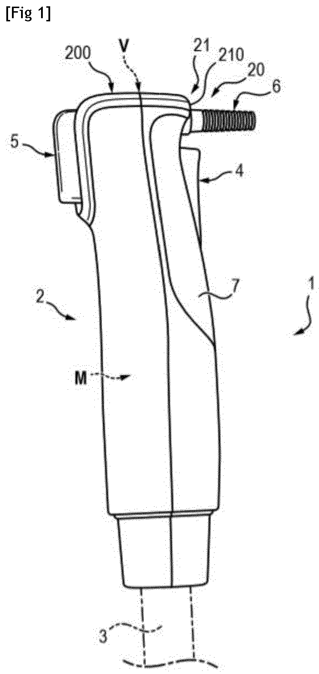

Le boîtier motorisé 2 en forme de fût tubulaire représenté sur les figures annexées est configuré pour être tenu à la main. Tel que représenté sur la figure 1, le boîtier motorisé 2 est prolongé vers le bas par un pied de mixage 3 pour former un appareil électroménager de type mixeur plongeant 1. Un tel appareil présente une physionomie générale semblable à celle des mixeurs ménagers de type plongeant déjà connus.

Sur la figure 1, le pied de mixage 3 est représenté seulement en partie, dans la mesure où le pied de mixage 3 ne constitue pas le cœur de l'invention. De manière connue, le pied de mixage 3 comporte à son extrémité inférieure un outil de travail rotatif, par exemple un outil de travail rotatif à au moins deux couteaux, notamment à deux, trois ou quatre couteaux.

Selon des modes de réalisation différents, le pied de mixage 3 peut être indémontable par rapport au boîtier motorisé 2, ou être prévu sous la forme d'un accessoire démontable par rapport au boîtier motorisé 2.

Le boîtier motorisé 2 loge un moteur M électrique. Le boîtier motorisé 2 est pourvu dans sa partie supérieure d'un premier actionneur de sécurité 4 qui est configuré pour autoriser l'alimentation électrique du moteur M lorsque ledit premier actionneur de sécurité 4 est activé par un utilisateur et pour interdire l'alimentation électrique de ce moteur lorsque ledit premier actionneur de sécurité 4 n'est pas ou n'est plus activé par ledit utilisateur.

Le boîtier motorisé 2 comporte également un second actionneur de commande 5 qui est configuré pour commander l'entraînement à vitesse variable du moteur M, ce second actionneur de commande 5 n'étant opérationnel que lorsque le premier actionneur de sécurité 4 a été préalablement sollicité pour activer le moteur M.

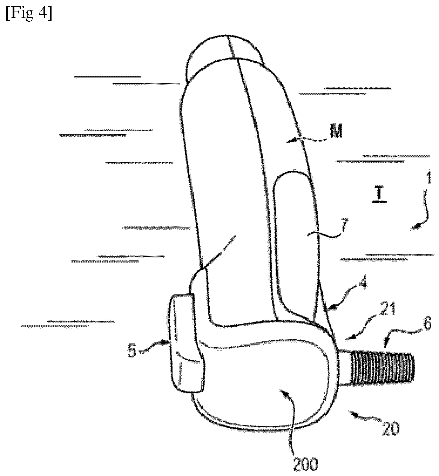

Conformément à l'invention, et ainsi que cela est particulièrement visible aux figures 1 et 4, le premier actionneur de sécurité 4 et le second actionneur de commande 5 sont disposés de part et d'autre d'une zone circonférentielle du boîtier motorisé 2.

Autrement dit, en supposant que la section droite du boîtier motorisé 2 s'inscrive dans un cercle, alors le premier actionneur de sécurité 4 et le second actionneur de commande 5 sont disposés de manière diamétralement opposée autour de ce cercle. On peut également dire que le premier actionneur de sécurité 4 et le second actionneur de commande 5 sont disposés à 180° l'un de l'autre sur ladite zone circonférentielle.

Du fait de cette caractéristique et, comme déjà indiqué plus haut, la cinématique de déverrouillage du boîtier motorisé 2 devient intuitive pour l'utilisateur dans le sens où, lorsque l'utilisateur prend le boîtier motorisé 2 en main, l'utilisateur déverrouille automatiquement le boîtier motorisé 2 en actionnant le premier actionneur de sécurité 4, cette action ne nécessitant pas d'autre action particulière de la part de l'utilisateur.

Avantageusement et, comme représenté sur les figures, le premier actionneur de sécurité 4 et le second actionneur de commande 5 sont disposés sensiblement ou exactement en regard l'un de l'autre, ce qui permet une prise en main naturelle qui fait que l'utilisateur n'a pas à casser son poignet. Au contraire, l'utilisateur garde le poignet parfaitement aligné avec l'avant-bras, ce qui assure une excellente prise en main et un bon maintien lors du démarrage du moteur M.

Dans le mode de réalisation représenté ici, le boîtier motorisé 2 comporte une zone d'extrémité supérieure 20 pourvue d'une face d'extrémité supérieure 200. Tel que visible sur les figures la face d'extrémité supérieure 200 est sensiblement plane. La zone d'extrémité supérieure 20 est pourvue latéralement d'une zone de raccordement 21 d'un cordon d'alimentation électrique 6, cette zone de raccordement 21 présentant une protubérance latérale 210.

Avantageusement, le premier actionneur de sécurité 4 est disposé juste en dessous de cette protubérance latérale 210 et du cordon d'alimentation électrique 6, de sorte que le premier actionneur de sécurité 4 se trouve en quelque sorte protégé par le cordon d'alimentation électrique 6.

De cette manière, une activation involontaire de ce premier actionneur de sécurité 4 n'est pas possible. En effet, si le boîtier motorisé 2 vient à être déposé sur une surface telle qu'une table T (visible à la figure 4) en faisant reposer le boîtier motorisé 2 du côté du cordon d'alimentation électrique 6, le boîtier motorisé 2 va naturellement basculer d'un quart de tour pour occuper la position représentée à la figure 4 dans laquelle le premier actionneur de sécurité 4 est disposé latéralement par rapport à ladite surface, notamment lorsque le pied de mixage 3 est assemblé avec le boîtier motorisé 2, ledit pied de mixage 3 s'étendant dans le prolongement du boîtier motorisé 2 en forme de fût tubulaire.

De cette manière, tout actionnement intempestif du premier actionneur de sécurité 4 est rendu impossible.

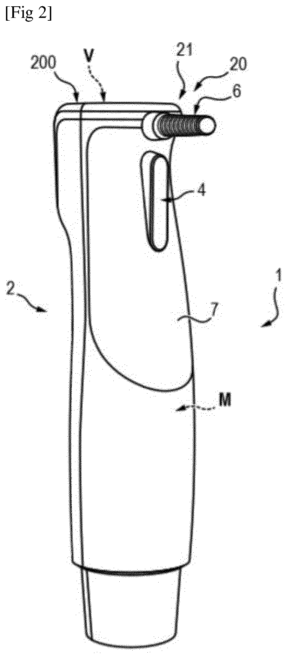

Ainsi que cela est particulièrement visible sur les figures 1, 2 et 4, le premier actionneur de sécurité 4 est entouré d'une zone réalisée en matériau élastomère 7, ce qui assure une excellente prise en main du boîtier motorisé 2.

Avantageusement, un indicateur visuel V est prévu pour renseigner sur l'état d'activation ou l'état d'extinction du moteur M. L'indicateur visuel V peut notamment être prévu au niveau de la face d'extrémité supérieure 200 du boîtier motorisé 2.

Notamment, cet indicateur visuel V peut être visible lorsque le premier actionneur de sécurité 4 n'est pas sollicité, et au contraire ne pas être visible lorsque le premier actionneur de sécurité 4 est enclenché.

Par exemple, cet indicateur visuel V peut prendre la forme d'un logo en forme de cadenas, ce logo étant allumé lorsque le premier actionneur de sécurité 4 n'est pas sollicité, ce logo étant au contraire éteint lorsque le premier actionneur de sécurité 4 est enclenché.

Avantageusement et, comme montré dans l'exemple de réalisation illustré sur les figures annexées, le premier actionneur de sécurité 4 est mobile entre une position de repos, dans laquelle le premier actionneur de sécurité 4 interdit l'alimentation électrique du moteur M et une position de fonctionnement dans laquelle le premier actionneur de sécurité 4 autorise l'alimentation électrique du moteur M. A cet effet le premier actionneur de sécurité 4 est associé à un interrupteur électrique A monté dans le circuit d'alimentation électrique du moteur M. Selon une forme de réalisation préférée, l'interrupteur A est en position ouverte lorsque le premier actionneur de sécurité 4 occupe la position de sécurité en l'absence de sollicitation de la part de l'utilisateur, et est en position fermée lorsque le premier actionneur de sécurité 4 occupe la position de fonctionnement sous l'action de l'utilisateur.

Tel que montré dans l'exemple de réalisation illustré sur les figures annexées, le premier actionneur de sécurité 4 a la forme d'une lame basculante dont une partie forme saillie du boîtier motorisé 2 en l'absence de sollicitation.

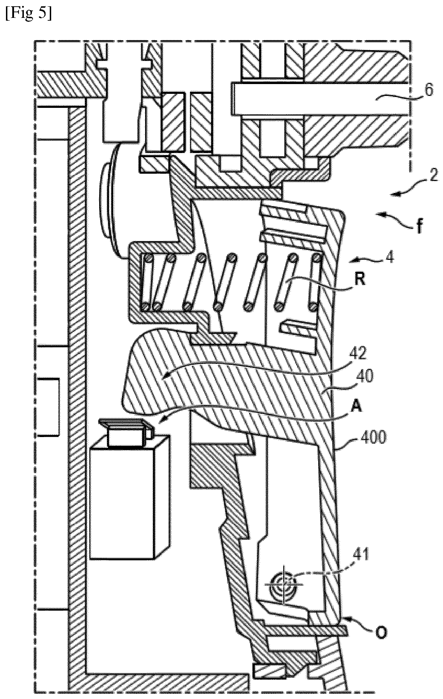

En se reportant plus particulièrement à la figure 5, on note que ce premier actionneur de sécurité 4 est en partie logé dans une ouverture O que le boîtier motorisé 2 comporte à cet effet.

Le premier actionneur de sécurité 4 est formé d'un corps 40 présentant une face extérieure 400 accessible pour un utilisateur et allongée selon l'axe du fût tubulaire. La partie basse du corps 40 est pourvue d'un axe de pivotement 41. Dans une région intermédiaire, un élément saillant 42 en forme de pied nait et s'étend à l'opposé de la face extérieure 400. Par ailleurs, la partie supérieure du corps 40 accueille un ressort R, par exemple un ressort hélicoïdal, qui tend à faire ressortir le premier actionneur de sécurité 4 de son logement.

Dans ces conditions, on comprend que, dès lors qu'un utilisateur actionne le corps 40 dans le sens de la flèche f, l'utilisateur oblige le ressort R à se comprimer, ce qui permet à l'extrémité distale de l'élément saillant 42 (c'est à dire l'extrémité qui est dirigée à l'opposé du corps 40) de venir toucher un bouton de commande de l'interrupteur électrique A monté dans le circuit d'alimentation électrique du moteur M pour autoriser l'alimentation électrique du moteur M. Le second actionneur de commande 5 peut alors être actionné par l'utilisateur pour commander la rotation du moteur M à vitesse variable. Le second actionneur de commande 5 est ainsi déverrouillé.

Ainsi, la position de repos du premier actionneur de sécurité 4 occupée en l'absence de sollicitation de la part de l'utilisateur est stable, tandis que la position de fonctionnement du premier actionneur de sécurité 4 nécessite une action continue de la part de l'utilisateur. En d'autres termes, le premier actionneur de sécurité 4 est un actionneur mécanique mobile entre la position de repos stable interdisant l'alimentation électrique du moteur M, occupée en l'absence de sollicitation de l'utilisateur et la position de fonctionnement autorisant l'alimentation électrique du moteur M, occupée lors d'une sollicitation de l'utilisateur.

Tel que bien visible sur les figures, la section du fut tubulaire diminue à partir de l'axe de pivotement 41 en direction de la zone de raccordement 21 du cordon d'alimentation électrique 6 au boîtier motorisé 2. L'axe de pivotement 41 est agencé dans la partie inférieure du premier actionneur de sécurité 4 à l'opposé de la zone de raccordement 21 du cordon d'alimentation électrique 6 au boîtier motorisé 2. Le premier actionneur de sécurité 4 en forme d'une lame basculante présente une partie mobile s'étendant au-dessus de l'axe de pivotement 41, cette partie mobile étant proéminente en position de repos, c'est-à-dire en l'absence de sollicitation de la part de l'utilisateur. En d'autres termes, la partie de la lame basculante formant saillie dudit boîtier motorisé 2 en l'absence de sollicitation est agencée entre l'axe de pivotement 41 et la zone de raccordement 21 du cordon d'alimentation électrique 6 au boîtier motorisé 2.

Dans le mode de réalisation qui vient d'être décrit, le premier actionneur de sécurité 4 en position de fonctionnement autorise l'alimentation électrique du moteur M en actionnant l'interrupteur électrique A monté dans le circuit d'alimentation électrique du moteur M.

A titre de variante, le premier actionneur de sécurité 4 pourrait être un actionneur mécanique mobile entre une position de repos bloquant le second actionneur de commande 5 dans une position dans laquelle le second actionneur de commande 5 interdit l'alimentation électrique du moteur M, et une position de fonctionnement autorisant le déplacement du second actionneur de commande 5 vers des positions dans lesquelles est autorisée l'alimentation électrique du moteur M pour commander l'entraînement à vitesse variable du moteur M.

A titre de variante non couverte par l'invention, le premier actionneur de sécurité 4 n'est pas nécessairement un actionneur mécanique mobile entre une position de repos et une position de fonctionnement. Le premier actionneur de sécurité 4 peut notamment comporter au moins un capteur associé à un circuit de commande autorisant l'alimentation électrique du moteur M lorsque ledit au moins un capteur est sollicité par un utilisateur, et interdisant l'alimentation électrique du moteur M lorsque ledit au moins un capteur n'est pas sollicité par un utilisateur. Le ou au moins l'un des capteurs peut par exemple être un capteur capacitif, un capteur de pression, un capteur thermique, ou un capteur optique.

Le second actionneur de commande 5 qui permet de gérer la vitesse peut notamment être envisagé comme un élément mécanique relié à une variation de résistance électrique, comme un capteur de pression relié à une variation de résistance électrique ou encore comme un capteur capacitif linéaire qui, en fonction du déplacement du doigt vers le haut ou vers le bas (donc du positionnement du doigt sur une zone bien spécifique), permet de faire varier la vitesse. Dans le cas d'un élément mécanique relié à une variation de résistance électrique, cet élément mécanique peut notamment déplacer une pièce mobile d'un composant monté dans le circuit d'alimentation électrique du moteur M pour faire varier une résistance électrique, ou encore être mobile par rapport à des pistes résistives montées dans le circuit d'alimentation électrique du moteur M pour faire varier une résistance électrique.

Préférentiellement et comme montré dans les figures annexées, ce second actionneur de commande 5 a la forme d'un bouton poussoir qui fait saillie du boîtier motorisé 2 en l'absence de sollicitation de la part de l'utilisateur, et qui est allongé selon l'axe du fût tubulaire.

Ainsi, l'utilisateur détecte facilement la présence de ce bouton poussoir bien qu'il ne soit pas directement dans son champ de vision.

De préférence, ce bouton poussoir est mobile contre un dispositif de rappel élastique configuré pour que le bouton poussoir occupe une position dans laquelle le moteur n'est pas alimenté en l'absence de sollicitation de la part de l'utilisateur.

La présente invention n'est nullement limitée à l'exemple de réalisation décrit et à ses variantes, mais englobe de nombreuses modifications pour autant qu'elles rentrent dans le cadre des revendications.

## Revendications

1. Boîtier motorisé (2) en forme de fût tubulaire configuré pour être tenu à la main, notamment pour appareil électroménager de type mixeur plongeant (1), ledit boîtier motorisé (2) logeant un moteur (M), ledit boîtier motorisé (2) étant pourvu d'un premier actionneur de sécurité (4), configuré pour autoriser l'alimentation électrique dudit moteur (M) lorsqu'il est activé par un utilisateur et pour interdire l'alimentation électrique du moteur (M) lorsqu'il n'est pas activé par l'utilisateur, et d'un second actionneur de commande (5) configuré pour commander l'entraînement à vitesse variable dudit moteur (M), le second actionneur de commande (5) n'étant opérationnel que lorsque le premier actionneur de sécurité (4) a été préalablement sollicité pour activer ledit moteur (M), ledit premier actionneur de sécurité (4) et ledit second actionneur de commande (5) étant disposés de part et d'autre d'une zone circonférentielle dudit boîtier motorisé (2), le boîtier motorisé (2) comportant un cordon d'alimentation électrique (6) et une zone de raccordement (21) dudit cordon d'alimentation électrique (6) au boîtier motorisé (2), ladite zone de raccordement (21) étant agencée dans une zone d'extrémité supérieure (20) dudit boîtier motorisé (2), ledit premier actionneur de sécurité (4) s'étendant juste en dessous de la zone de raccordement (21) dudit cordon d'alimentation électrique (6) au dit boîtier motorisé (2) **caractérisé en ce que** ledit premier actionneur de sécurité (4) a la forme d'une lame basculante dont une partie forme saillie dudit boîtier motorisé (2) en l'absence de sollicitation et **en ce que** ledit premier actionneur de sécurité (4) en forme d'une lame basculante présente un axe de pivotement (41) agencé à l'opposé du cordon d'alimentation électrique (6).

2. Boîtier motorisé (2) selon la revendication 1, **caractérisé en ce que** ledit premier actionneur de sécurité (4) est disposé à l'opposé dudit second actionneur de commande (5) par rapport à ladite zone circonférentielle.

3. Boîtier motorisé (2) selon l'une des revendications 1 ou 2, **caractérisé en ce qu'**il présente une protubérance latérale (210) dans laquelle est agencée la zone de raccordement (21) dudit cordon d'alimentation électrique (6) au dit boîtier motorisé (2).

4. Boîtier motorisé (2) selon l'une des revendications 1 à 3, **caractérisé en ce qu'**il présente une face d'extrémité supérieure (200) qui comporte un indicateur visuel (V) de l'état d'activation ou de l'état d'extinction dudit moteur (M).

5. Boîtier motorisé (2) selon l'une des revendications 1 à 4, **caractérisé en ce que** ledit premier actionneur de sécurité (4) est un actionneur mécanique mobile entre une position de repos stable interdisant l'alimentation électrique du moteur (M), occupée en l'absence de sollicitation de l'utilisateur, et une position de fonctionnement autorisant l'alimentation électrique du moteur (M), occupée lors d'une sollicitation de l'utilisateur.

6. Boîtier motorisé (2) selon la revendication 5, **caractérisé en ce que** ledit premier actionneur de sécurité (4) en position de fonctionnement autorise l'alimentation électrique du moteur (M) en actionnant un interrupteur électrique (A) monté dans le circuit d'alimentation électrique du moteur (M).

7. Boîtier motorisé (2) selon la revendication 5, **caractérisé en ce que** ledit premier actionneur de sécurité (4) est un actionneur mécanique mobile entre une position de repos bloquant le second actionneur de commande (5) dans une position dans laquelle le second actionneur de commande (5) interdit l'alimentation électrique du moteur (M), et une position de fonctionnement autorisant le déplacement du second actionneur de commande (5) vers des positions dans lesquelles est autorisée l'alimentation électrique du moteur (M) pour commander l'entraînement à vitesse variable du moteur (M).

8. Boîtier motorisé (2) selon l'une des revendications 1 à 7, **caractérisé en ce que** ledit premier actionneur de sécurité (4) est allongé selon la direction du fût tubulaire.

9. Boîtier motorisé (2) selon l'une des revendications 1 à 8, **caractérisé en ce que** la section du fut tubulaire diminue à partir de l'axe de pivotement (41) en direction de la zone de raccordement (21) du cordon d'alimentation électrique (6) au boîtier motorisé (2).

10. Boîtier motorisé (2) selon l'une des revendications 1 à 9, **caractérisé en ce que** la partie de la lame basculante formant saillie dudit boîtier motorisé (2) en l'absence de sollicitation est agencée entre l'axe de pivotement (41) et la zone de raccordement (21) du cordon d'alimentation électrique 6 au boîtier motorisé (2).

11. Boîtier motorisé (2) selon l'une des revendications 1 à 10, **caractérisé en ce que** ledit premier actionneur de sécurité (4) en forme d'une lame basculante comporte un indicateur de position restant visible dans les positions de la lame basculante dans lesquelles le premier actionneur de sécurité (4) interdit l'alimentation électrique du moteur (M).

12. Boîtier motorisé (2) selon l'une des revendications 1 à 11, **caractérisé en ce que** ledit premier actionneur de sécurité (4) est au moins partiellement entouré par une zone réalisée en matériau élastomère (7), et de préférence est complètement entouré par une zone réalisée en matériau élastomère (7).

13. Boîtier motorisé (2) selon l'une des revendications 1 à 12, **caractérisé en ce que** ledit second actionneur de commande (5) est allongé selon la direction du fût tubulaire.

14. Boîtier motorisé (2) selon l'une des revendications 1 à 13, **caractérisé en ce que** ledit second actionneur de commande (5) a la forme d'un bouton poussoir formant saillie dudit boîtier motorisé (2) en l'absence de sollicitation.

15. Appareil électroménager de type mixeur plongeant (1), comprenant un boîtier motorisé (2) en forme de fût tubulaire, ainsi qu'un pied de mixage (3) comportant une extrémité inférieure pourvue d'un outil de travail rotatif configuré pour être entrainé en rotation par ledit boîtier motorisé (2), **caractérisé en ce que** le boîtier motorisé (2) est conforme à l'une des revendications 1 à 14.

16. Appareil électroménager de type mixeur plongeant (1) selon la revendication 15, **caractérisé en ce que** ledit pied de mixage (3) est configuré pour être assemblé avec le boîtier motorisé (2) pour entrainer en rotation l'outil de travail rotatif.

## Patentansprüche

1. Motorisiertes Gehäuse (2) in Form eines röhrenförmigen Schafts, der so konfiguriert ist, dass er in der Hand gehalten werden kann, insbesondere für ein Haushaltsgerät vom Typ Stabmixer (1), wobei das motorisierte Gehäuse (2) einen Motor (M) aufnimmt, wobei das motorisierte Gehäuse (2) mit einer ersten Sicherheitsbetätigungsvorrichtung (4), die so konfiguriert ist, dass sie die Stromversorgung des Motors (M) zulässt, wenn sie von einem Benutzer aktiviert wird, und die Stromversorgung des Motors (M) unterbindet, wenn sie nicht vom Benutzer aktiviert wird, und einer zweiten Steuerbetätigungsvorrichtung (5) versehen ist, die so konfiguriert ist, dass sie den drehzahlvariablen Antrieb des Motors (M) steuert, wobei die zweite Steuerbetätigungsvorrichtung (5) nur dann betriebsbereit ist, wenn zuvor die erste Sicherheitsbetätigungsvorrichtung (4) betätigt wurde, um den Motor (M) zu aktivieren, wobei die erste Sicherheitsbetätigungsvorrichtung (4) und die zweite Steuerbetätigungsvorrichtung (5) beiderseits eines Umfangsbereichs des motorisierten Gehäuses (2) angeordnet sind, wobei das motorisierte Gehäuse (2) ein Stromversorgungskabel (6) und einen Anschlussbereich (21) des Stromversorgungskabels (6) am motorisierten Gehäuse (2) umfasst, wobei der Anschlussbereich (21) in einem oberen Endbereich (20) des motorisierten Gehäuses (2) eingerichtet ist, wobei sich die erste Sicherheitsbetätigungsvorrichtung (4) unmittelbar unterhalb des Anschlussbereichs (21) des Stromversorgungskabels (6) am motorisierten Gehäuse (2) erstreckt, **dadurch gekennzeichnet, dass** die erste Sicherheitsbetätigungsvorrichtung (4) die Form einer Kippplatte aufweist, von der ein Teil bei Nichtbetätigung einen Vorsprung vom motorisierten Gehäuse (2) bildet, und dadurch, dass die erste Sicherheitsbetätigungsvorrichtung (4) in Form einer Kippplatte eine Schwenkachse (41) aufweist, die dem Stromversorgungskabel (6) gegenüberliegend eingerichtet ist.

2. Motorisiertes Gehäuse (2) nach Anspruch 1, **dadurch gekennzeichnet, dass** die erste Sicherheitsbetätigungsvorrichtung (4) in Bezug auf den Umfangsbereich der zweiten Steuerbetätigungsvorrichtung (5) gegenüberliegend angeordnet ist.

3. Motorisiertes Gehäuse (2) nach einem der Ansprüche 1 oder 2, **dadurch gekennzeichnet, dass** es einen seitlichen Vorsprung (210) aufweist, in dem der Anschlussbereich (21) des Stromversorgungskabels (6) am motorisierten Gehäuse (2) eingerichtet ist.

4. Motorisiertes Gehäuse (2) nach einem der Ansprüche 1 bis 3, **dadurch gekennzeichnet, dass** es eine obere Endseite (200) aufweist, die einen visuellen Indikator (V) für den Aktivierungszustand oder Inaktivierungszustand des Motors (M) umfasst.

5. Motorisiertes Gehäuse (2) nach einem der Ansprüche 1 bis 4, **dadurch gekennzeichnet, dass** die erste Sicherheitsbetätigungsvorrichtung (4) eine mechanische Betätigungsvorrichtung ist, die zwischen einer stabilen Ruheposition, die die Stromversorgung des Motors (M) unterbindet und bei Nichtbetätigung durch den Benutzer eingenommen wird, und einer Betriebsposition, die die Stromversorgung des Motors (M) zulässt und bei Betätigung durch den Benutzer eingenommen wird, bewegt werden kann.

6. Motorisiertes Gehäuse (2) nach Anspruch 5, **dadurch gekennzeichnet, dass** die erste Sicherheitsbetätigungsvorrichtung (4) in Betriebsposition die Stromversorgung des Motors (M) zulässt, indem sie einen elektrischen Schalter (A), der im Stromversorgungskreis des Motors (M) angebracht ist, betätigt.

7. Motorisiertes Gehäuse (2) nach Anspruch 5, **dadurch gekennzeichnet, dass** die erste Sicherheitsbetätigungsvorrichtung (4) eine mechanische Betätigungsvorrichtung ist, die zwischen einer Ruheposition, die die zweite Steuerbetätigungsvorrichtung (5) in einer Position sperrt, in der die zweite Steuerbetätigungsvorrichtung (5) die Stromversorgung des Motors (M) unterbindet, und einer Betriebsposition, die die Verlagerung der zweiten Steuerbetätigungsvorrichtung (5) hin zu Positionen, in denen die Stromversorgung des Motors (M) zugelassen ist, bewegt werden kann, um den drehzahlvariablen Antrieb des Motors (M) zu steuern.

8. Motorisiertes Gehäuse (2) nach einem der Ansprüche 1 bis 7, **dadurch gekennzeichnet, dass** die erste Sicherheitsbetätigungsvorrichtung (4) in der Richtung des röhrenförmigen Schafts länglich ist.

9. Motorisiertes Gehäuse (2) nach einem der Ansprüche 1 bis 8, **dadurch gekennzeichnet, dass** der Querschnitt des röhrenförmigen Schafts von der Schwenkachse (41) in Richtung des Anschlussbereichs (21) des Stromversorgungskabels (6) am motorisierten Gehäuse (2) kleiner wird.

10. Motorisiertes Gehäuse (2) nach einem der Ansprüche 1 bis 9, **dadurch gekennzeichnet, dass** der Teil der Kippplatte, der bei Nichtbetätigung einen Vorsprung vom motorisierten Gehäuse (2) bildet, zwischen der Schwenkachse (41) und dem Anschlussbereich (21) des Stromversorgungskabels (6) am motorisierten Gehäuse (2) eingerichtet ist.

11. Motorisiertes Gehäuse (2) nach einem der Ansprüche 1 bis 10, **dadurch gekennzeichnet, dass** die erste Sicherheitsbetätigungsvorrichtung (4) in Form einer Kippplatte einen Positionsindikator umfasst, der in den Positionen der Kippplatte, in denen die erste Sicherheitsbetätigungsvorrichtung (4) die Stromversorgung des Motors (M) unterbindet, sichtbar bleibt.

12. Motorisiertes Gehäuse (2) nach einem der Ansprüche 1 bis 11, **dadurch gekennzeichnet, dass** die erste Sicherheitsbetätigungsvorrichtung (4) mindestens teilweise von einem Bereich umgeben ist, der aus Elastomermaterial (7) hergestellt ist, und vorzugsweise vollständig von einem Bereich umgeben ist, der aus Elastomermaterial (7) hergestellt ist.

13. Motorisiertes Gehäuse (2) nach einem der Ansprüche 1 bis 12, **dadurch gekennzeichnet, dass** die zweite Steuerbetätigungsvorrichtung (5) in der Richtung des röhrenförmigen Schafts länglich ist.

14. Motorisiertes Gehäuse (2) nach einem der Ansprüche 1 bis 13, **dadurch gekennzeichnet, dass** die zweite Steuerbetätigungsvorrichtung (5) die Form einer Drucktaste aufweist, die bei Nichtbetätigung einen Vorsprung vom motorisierten Gehäuse (2) bildet.

15. Haushaltsgerät vom Typ Stabmixer (1), das ein motorisiertes Gehäuse (2) in Form eines röhrenförmigen Schafts sowie einen Mixfuß (3) umfasst, der ein unteres Ende umfasst, das mit einem drehenden Arbeitswerkzeug versehen ist, das so konfiguriert ist, dass es von dem motorisierten Gehäuse (2) in Drehung versetzt werden kann, **dadurch gekennzeichnet, dass** das motorisierte Gehäuse (2) einem der Ansprüche 1 bis 14 entspricht.

16. Haushaltsgerät vom Typ Stabmixer (1) nach Anspruch 15, **dadurch gekennzeichnet, dass** der Mixfuß (3) so konfiguriert ist, dass er mit dem motorisierten Gehäuse (2) zusammengebaut werden kann, um das drehende Arbeitswerkzeug in Drehung zu versetzen.

## Claims

1. Motorized housing (2) in the form of a tubular shaft, configured to be hand-held, in particular for a household appliance of the hand blender type (1), said motorized housing (2) receiving a motor (M), said motorized housing (2) being provided with a first safety actuator (4), configured to allow electricity to be supplied to said motor (M) when it is activated by a user and to prevent electricity from being supplied to the motor (M) when it is not activated by the user, and a second control actuator (5), configured to control the variable-speed driving of said motor (M), the second control actuator (5) being operational only when the first safety actuator (4) has been urged beforehand to activate said motor (M), said first safety actuator (4) and said second control actuator (5) being disposed on either side of a circumferential zone of said motorized housing (2), the motorized housing (2) comprising an electric power cord (6) and a zone (21) for connecting said electric power cord (6) to said motorized housing (2), said connection zone (21) being arranged in an upper end zone (20) of said motorized housing (2), said first safety actuator (4) extending just below the zone (21) for connecting said electric power cord (6) to said motorized housing (2), **characterized in that** said first safety actuator (4) has the form of a tilting blade, a part of which projects from said motorized housing (2) in the absence of urging, and **in that** said first safety actuator (4) in the form of a tilting blade has a pivot axis (41) arranged opposite the electric power cord (6).

2. Motorized housing (2) according to claim 1, **characterized in that** said first safety actuator (4) is disposed opposite said second control actuator (5) with respect to said circumferential zone.

3. Motorized housing (2) according to any one of claims 1 or 2, **characterized in that** it has a lateral protrusion (210), in which is arranged the zone (21) for connecting said electric power cord (6) to said motorized housing (2).

4. Motorized housing (2) according to any one of claims 1 to 3, **characterized in that** it has an upper end face (200) which comprises a visual indicator (V) of the activation state or of the off state of said motor (M).

5. Motorized housing (2) according to any one of claims 1 to 4, **characterized in that** said first safety actuator (4) is a mechanical actuator which is movable between a stable rest position preventing electricity being supplied to the motor (M), occupied in the absence of urging of the user, and an operating position enabling electricity being supplied to the motor (M), occupied during an urging of the user.

6. Motorized housing (2) according to claim 5, **characterized in that** said first safety actuator (4) in the operating position enables electricity being supplied to the motor (M) by actuating an electric switch (A) mounted in the electricity supply circuit of the motor (M).

7. Motorized housing (2) according to claim 5, **characterized in that** said first safety actuator (4) is a mechanical actuator which is movable between a rest position blocking the second control actuator (5) in a position, in which the second control actuator (5) prevents electricity being supplied to the motor (M), and an operating position enabling the movement of the second control actuator (5) to positions, in which electricity being supplied to the motor (M) is enabled to control the variable-speed driving of the motor (M).

8. Motorized housing (2) according to any one of claims 1 to 7, **characterized in that** said first safety actuator (4) is elongate along the direction of the tubular shaft.

9. Motorized housing (2) according to any one of claims 1 to 8, **characterized in that** the cross-section of the tubular shaft decreases from the pivot axis (41) in the direction of the zone (21) for connecting the electric power cord (6) to the motorized housing (2).

10. Motorized housing (2) according to any one of claims 1 to 9, **characterized in that** the part of the tilting blade projecting from said motorized housing (2) in the absence of urging is arranged between the pivot axis (41) and the zone (21) for connecting the electric power cord (6) to the motorized housing (2).

11. Motorized housing (2) according to any one of claims 1 to 10, **characterized in that** said first safety actuator (4) in the form of a tilting blade comprises a position indicator remaining visible in the positions of the tilting blade, in which the first safety actuator (4) prevents electricity being supplied to the motor (M).

12. Motorized housing (2) according to any one of claims 1 to 11, **characterized in that** said first safety actuator (4) is at least partially surrounded by a zone made of elastomer material (7), and preferably is completely surrounded by a zone made of elastomer material (7).

13. Motorized housing (2) according to any one of claims 1 to 12, **characterized in that** said second control actuator (5) is elongate along the direction of the tubular shaft.

14. Motorized housing (2) according to any one of claims 1 to 13, **characterized in that** said second control actuator (5) has the form of a pushbutton projecting from said motorized housing (2) in the absence of urging.

15. Household appliance of the hand blender type (1), comprising a motorized housing (2) in the form of a tubular shaft, as well as a mixing attachment (3) comprising a lower end provided with a rotary work tool, configured to be rotated by said motorized housing (2), **characterized in that** the motorized housing (2) is according to any one of claims 1 to 14.

16. Household appliance of the hand blender type (1) according to claim 15, **characterised in that** said mixing attachment (3) is configured to be assembled with the motorized housing (2) to rotate the rotary work tool.
